# FASCICULE DE BREVET EUROPEEN

(11) **EP 2 432 591 B1**
(45) Date de publication et mention de la délivrance du brevet: **05.12.2018**
(21) Numéro de dépôt: 10728781.5
(22) Date de dépôt: 19.05.2010
(51) Int. Cl.: B01J 23/745, B01J 37/08, B01J 37/02, B01J 37/00, B01J 35/02, C01B 3/58, C01B 3/40, C10K 3/02, C10J 3/48, C10J 3/84

(54) **CATALYSEUR POUR LE RÉFORMAGE DE GOUDRONS UTILISABLES DANS LA VAPOGAZÉIFICATION DE LA BIOMASSE**
KATALYSATOR ZUM REFORMIEREN VON TEER, DER BEI DER DAMPFVERGASUNG VON BIOMASSE VERWENDET WIRD
CATALYST FOR REFORMING TAR USED IN THE STEAM GASIFICATION OF BIOMASS

(30) Priorité: 20.05.2009 FR 0953376
(43) Date de publication de la demande: 28.03.2012
(73) Titulaire: Centre National de la Recherche Scientifique (C.N.R.S.), 75016 Paris (FR); Université de Strasbourg, 67000 Strasbourg (FR)
(72) Inventeur: KIENNEMANN, Alain, F-67400 Illkirch-Graffenstaden (FR); COURSON, Claire, F-67270 Kienheim (FR); VIRGINIE, Mirella, F-67000 Strasbourg (FR)
(74) Mandataire: Lavoix
(86) Numéro de dépôt international: PCT/FR2010/050962
(87) Numéro de publication internationale: WO 2010/133801

(56) Documents cités:
- WO-A-01/89687
- DEVI L ET AL: "Olivine as tar removal catalyst for biomass gasifiers: Catalyst characterization" APPLIED CATALYSIS A: GENERAL, ELSEVIER SCIENCE, AMSTERDAM, NL, vol. 294, no. 1, 4 octobre 2005 (2005-10-04), pages 68-79, XP025332936 ISSN: 0926-860X [extrait le 2005-10-04]
- AZHAR UDDIN ET AL: "Catalytic decomposition of biomass tars with iron oxide catalysts" FUEL, IPC SCIENCE AND TECHNOLOGY PRESS, GUILDFORD, GB, vol. 87, no. 4-5, 15 décembre 2007 (2007-12-15), pages 451-459, XP022391983 ISSN: 0016-2361 cité dans la demande

## Description

La présente invention a trait au domaine de la catalyse hétérogène. Elle concerne plus spécifiquement un système catalytique de type catalyseur supporté, qui est utile pour effectuer le vaporéformage de goudrons, et qui s'avère notamment intéressant dans le cadre de procédés de gazéification de composés organiques, en particulier dans des procédés de vapogazéification de la biomasse.

Les composés organiques issus de la biomasse (le bois par exemple) sont employés de longue date comme combustibles, principalement pour le chauffage. En raison de son relativement faible pouvoir calorifique, cette utilisation peu rentable s'est vue supplantée plus récemment par une autre transformation plus intéressante, à savoir la gazéification, qui consiste à convertir les composés organiques en des gaz exploitables, notamment en tant que combustible gazeux, par exemple dans des piles à combustibles, ou bien comme constituants gazeux de base pour la synthèse de composés chimiques.

La gazéification de composés issus de la biomasse consiste typiquement en une vapogazéification, où les composés qu'on souhaite convertir sont mis en présence de vapeur d'eau et d'un catalyseur adapté, à des températures relativement élevées. Il en résulte, selon un processus thermochimique complexe, la conversion des composés organiques en un mélange de gaz (dit gaz de synthèse) qui contient principalement de l'hydrogène, du monoxyde de carbone et/ou du dioxyde de carbone, et du méthane. Parmi les procédés de conversion thermochimiques actuellement utilisés, la gazéification en lit fluidisé avec de la vapeur d'eau permet d'optimiser, grâce aux températures de chauffage élevées mises en jeu, le rendement en produits gazeux obtenus (en particulier en hydrogène), tout en proposant des temps de séjour avantageux ainsi qu'une réduction des quantités de résidus produits, avec en outre un pouvoir calorifique élevé du gaz produit (plus important que les procédés de gazéification sous air qui conduisent à des gaz dilués par de l'azote).

Un problème récurrent qui se pose avec ces mélanges de gaz issus de procédés de vapogazéification de composés organiques est que les processus de vapogazéification des composés organiques s'accompagnent de la formation de sous-produits indésirables, qui sont de nature à polluer les gaz synthétisés. En particulier, notamment en raison des températures élevées mises en jeu, les réactions de vapogazéification donnent souvent naissance à des goudrons.

Au sens où il est employé dans la présente description, le terme "goudron" désigne un composé aromatique ayant une masse moléculaire supérieure à celle du benzène (comme par exemple le toluène ou les naphtalènes), ou bien un mélange comprenant de tels composés aromatiques. Les goudrons qui sont obtenus dans le cadre d'un procédé de vapogazéification incluent typiquement des composés comprenant de 1 à 5 noyaux aromatiques, oxygénés ou non.

La présence de tels goudrons dans les gaz issus de la vapogazéification rend ces gaz impropres à certaines applications industrielles, par exemple dans des turbines à gaz ou dans des piles à combustibles. Les goudrons tendent en effet à se condenser en des structures complexes de nature à encrasser ces dispositifs. Cet inconvénient constitue un frein majeur à la viabilité économique des procédés de vapogazéification de la biomasse.

Plus généralement, la génération de goudrons lors de la vapogazéification pose un autre problème, à savoir que les goudrons produits sont de nature à empoisonner le catalyseur employé pour réaliser la gazéification, les goudrons tendant à se déposer sur la surface du catalyseur et, par conséquent, à le désactiver progressivement.

Différentes méthodes ont été proposées pour éliminer ces goudrons, soit en aval du procédé de gazéification (méthodes d'élimination dites secondaires) soit directement dans le réacteur où se forment ces goudrons (méthodes dites primaires, qui permettent l'inhibition de la formation des goudrons et/ou la transformation des goudrons formés, au sein du réacteur), qui ne s'avèrent pas toujours satisfaisantes.

Parmi les méthodes secondaires, il a été envisagé des méthodes chimiques (craquage thermique notamment) ou mécaniques (filtres, cyclones, centrifugeuses, laveurs) qui, bien qu'efficaces pour la diminution de la teneur en goudrons dans les gaz issus des procédés de vapogazéification de la biomasse, s'avèrent souvent coûteuses, notamment en termes de consommation énergétique (dans le cas du craquage en particulier) ou en termes de traitement (dans le cas des filtres ou laveurs craquage en particulier).

Concernant les méthodes primaires, pour essayer d'éliminer les goudrons ou d'inhiber leur formation à la source, il a été envisagé d'introduire différents types de catalyseurs au sein de réacteurs de vapogazéification, qui se sont révélés, en pratique, plus ou moins efficaces. Les catalyseurs proposés visent généralement à réduire catalytiquement les goudrons, selon des réaction de réformage consistant à convertir les goudrons en présence d'eau et/ou de CO₂ en un mélange gazeux comprenant notamment de l'hydrogène, et du CO et/ou du CO₂, typiquement selon l'une et/ou l'autre des réactions suivantes (où CₙHₘ représente un goudron) :

CₙHₘ + nH₂O → nCO + (n+m/2)H₂

CₙHₘ + nCO₂ → 2nCO + m/2H₂

Dans ce cadre, il a été proposé d'employer, à titre de catalyseur, du sable, des dolomites et des magnésites calcinées, ou bien encore des olivines (dans Appl. Catal. A: General 294 (2005) 68-79) et des zéolithes, ainsi que des catalyseurs à base de composés métalliques (oxydes de nickel supportés en particulier). Les résultats qui ont été obtenus sont plus ou moins probants, avec des efficacités catalytiques pouvant varier en une large mesure y compris pour des catalyseurs de compositions proches. Dans ce cadre, il est à noter que les réactions mises en oeuvre au sein du réacteur de gazéification sont mal comprises, et que le choix d'un catalyseur adapté se fait dès lors de manière empirique. Les mécanismes mis en oeuvre sont aujourd'hui insuffisamment compris pour qu'on puisse prévoir *a priori* si un catalyseur s'avérera ou non efficace avant de l'avoir testé concrètement.

Parmi les catalyseurs proposés, les dolomites (carbonates de magnésium et de calcium) nécessitent d'être calcinées sous forme d'oxyde, ce qui conduit à une perte de surface spécifique et à une friabilité, qui engendre des phénomènes d'attrition du catalyseur (effritement progressif du catalyseur) et conduit à la formation non souhaitée de fines particules dans les effluents gazeux, ce qui rend l'emploi des dolomites délicat, en particulier dans les réacteurs à lit fluidisé, en particulier à l'échelle industrielle.

Les olivines (silicates mixtes de magnésium et de fer répondant typiquement à la formule (Mg₁₋ₓFeₓ)₂SiO₄ où x est un nombre non nul généralement de l'ordre de 0,1) sont, quant à elles, plus résistantes à l'attrition. Bien qu'elles aient une certaine activité dans la destruction des goudrons (similaire à celle des dolomites calcinées), elles se révèlent néanmoins insuffisamment efficaces pour qu'on puisse envisager leur emploi à l'échelle industrielle.

Concernant les catalyseurs à base de composés métalliques, il a été testé différents catalyseurs dans le cadre de la réaction de type vapogazéification de la biomasse. Dans ce cadre, il a surtout été développé des catalyseurs au nickel dont certains se sont avérés permettre un réformage des goudrons relativement efficace, en particulier à des températures de mise en oeuvre supérieures à 740°C, avec une élimination substantielle des goudrons, plus importante que dans le cas des olivines et dolomites calcinées précitées. Dans ce cadre, il a en particulier été décrit des catalyseurs à base de nickel supporté sur de l'alumine (dans Ind. Eng. Chem. Res., vol 36, p1335 (1997), par exemple) ou, plus récemment, dans la demande FR 2 809 030, des catalyseurs comprenant une phase active à base de nickel déposée sur un support d'olivine qui ont fourni d'excellents résultats pour le vaporéformage de goudrons.

Néanmoins, en dépit de ces avantages, les catalyseurs à base de nickel présentent l'inconvénient d'être sujet à des phénomènes d'attrition, en particulier lorsqu'ils sont employés dans des réacteurs à lit fluidisé. Outre une perte de l'efficacité catalytique au cours du temps, ces phénomènes d'attrition conduisent à une pollution non négligeable par le nickel des gaz produits, ce qui est inacceptable au niveau industriel compte tenu de la toxicité du nickel.

De plus, les catalyseurs au nickel tendent à se désactiver lorsqu'ils sont en contact avec des composés tels que les composés soufrés qui sont souvent obtenus dans le cadre de la vapogazéification de la biomasse. Le nickel à l'état d'oxydation 0 qui se forme en surface des catalyseurs au nickel se révèle en outre être un précurseur de coke de nature à conduire à la formation d'agrégats de carbone (cokes) qui sont susceptibles d'empoisonner le catalyseur. De plus, les catalyseurs à base de nickel nécessitent un recyclage à l'issue de leur utilisation qui s'avère particulièrement onéreux.

Un but de la présente invention est de fournir un nouveau système catalytique qui soit adapté pour catalyser le vaporéformage de goudrons, en particulier le vaporéformage de goudrons formés dans le cadre de la vapogazéification de composés organiques notamment issus de la biomasse, et ce avec une efficacité similaire à celle des catalyseurs au nickel précités en termes de conversion des goudrons en hydrogène, mais en s'affranchissant des problèmes rencontrés avec les catalyseurs au nickel, notamment en termes de toxicité et de coûts.

A cet effet, la présente invention propose de mettre en oeuvre un catalyseur spécifique, de type supporté, qui comprend un composé du fer sur un support à base d'olivine.

Plus précisément, la présente invention a pour objet un catalyseur qui comprend un support à base d'olivine sur lequel est déposé une couche à base d'un composé du fer susceptible d'être obtenue par imprégnation du support d'olivine par une solution comprenant un sel de fer, puis traitement thermique (généralement sous air) du support imprégné, à une température comprise entre 400 et 1400° C, de préférence comprise entre 600 et 1400° C avantageusement après un séchage préalable effectué suite à l'imprégnation et où la teneur en fer déposé sur le support, exprimée sur la base de la masse de fer élémentaire introduite rapportée à la masse totale du catalyseur est d'au moins 5 %.

Dans le cadre de la présente invention, les inventeurs ont maintenant mis en évidence que ce catalyseur spécifique à base de fer déposé sur olivine s'avère particulièrement efficace pour réaliser le vaporéformage de goudrons, notamment dans les gaz issus de procédé de vapogazéification de composés organiques, notamment issus de la biomasse. Concrètement, un catalyseur selon l'invention permet d'obtenir une conversion des goudrons importante, généralement supérieure à 60%, voire à 80% et pouvant atteindre 90%, voire plus, ce qui permet typiquement de réduire au moins d'un facteur 10 la teneur en goudrons dans les gaz issus de la gazéification. En outre, les catalyseurs de l'invention conduisent à un rendement élevé en hydrogène. Cette efficacité catalytique est conservée en présence des gaz générés lors de la vapogazéification de la biomasse, en particulier en présence de CO, CO₂, H₂ et CH₄ En outre le catalyseur reste actif à haute température et permet notamment d'effectuer des réactions de vaporéformage de goudrons à des températures allant de 700 à 900°C.

Il est à souligner que ces résultats s'avèrent inattendus au vu des données actuellement disponibles concernant les rares catalyseurs à base de composés du fer qui ont été envisagés et testés dans le cadre de la vapogazéification de la biomasse et qui n'ont, en général, pas montré une activité particulièrement efficace dans le traitement des goudrons. Au contraire, les articles concernant les catalyseurs à base de fer sont plutôt de nature à laisser supposer qu'un dépôt de fer sur un support ne conduit pas à des résultats intéressants pour effectuer un vaporéformage de goudrons.

Ainsi, par exemple, il a été décrit dans Catalysis Today, vol 27, pp. 55-62 (1996) des catalyseurs permettant d'éliminer des goudrons dans des gaz issus de la gazéification de la biomasse. L'emploi de fer a été envisagé dans ce cadre, mais n'a pas conduit à une amélioration de la conversion des goudrons. En particulier, il a été testé dans ce document une dolomite et une dolomite contenant du fer conduisant à des résultats identiques.

De même, dans Fuel, vol 87, pp 451-459 (2008), il a été testé une alumine porteuse d'un dépôt de Fe₂O₃ pour la gazéification catalytique de bois de cèdre, qui, là encore, a conduit à des résultats similaires à ceux obtenus avec l'alumine seule.

Ainsi, il s'avère que, contre toute attente, les catalyseurs spécifiques à base de fer qui ont été développés dans le cadre de la présente invention permettent d'obtenir des résultats au moins similaires à ceux obtenus avec les catalyseurs au nickel précités. En outre, les inventeurs ont maintenant mis en évidence que les propriétés catalytiques des catalyseurs de l'invention sont remarquablement stables dans le temps, ce qui permet une exploitation intéressante de ces catalyseurs aussi bien à l'échelle du laboratoire qu'à l'échelle industrielle.
Les travaux effectués par les inventeurs dans le cadre de l'invention ont de plus permis d'établir que, dans un catalyseur selon l'invention, il est possible d'intégrer une quantité importante de fer dans la couche déposée sur l'olivine (typiquement de 10 à 20% en poids par rapport au poids total du catalyseur, voire plus), et que, dans le cas le plus général, la quasi-totalité du fer introduit sur l'olivine est disponible pour catalyser la réaction de réformage, ce qui permet d'obtenir des catalyseurs ayant une activité particulièrement élevée

Par ailleurs, le dépôt de la couche opéré sur l'olivine, par imprégnation, séchage et calcination, confère au catalyseur final une surface spécifique plus importante que celle du support d'olivine de départ (généralement de l'ordre de 10m²/g pour le catalyseur final, contre moins de 1m²/g pour l'olivine de départ), ce qui augmente la surface d'échange disponible entre les goudrons et le catalyseur, ce qui augmente encore son efficacité.

D'autre part, contrairement aux catalyseurs au nickel, les catalyseurs selon l'invention ne comprennent pas de composés toxiques, et ils permettent donc d'obtenir des gaz issus de la vapogazéification de la biomasse exempts de composés toxiques qu'il n'est donc pas nécessaire de traiter avant usage, et qui ne présentent pas de dangerosité pour les manipulateurs, autre que celle liée à l'emploi d'hydrogène et de CO.

Par ailleurs, compte tenu de la présence de composés du fer dans les catalyseurs de l'invention, ceux-ci s'avèrent propres à réduire la teneur en certains composés généralement présents dans les gaz issus de la vapogazéification de composés organiques. En particulier, la mise en oeuvre d'un catalyseur selon l'invention dans le milieu réactionnel ou en aval d'une réaction de vapogazéification de la biomasse permet de s'affranchir de la présence d'au moins une partie des composés soufrés (H₂S notamment) et de l'ammoniac NH₃ qui se forment fréquemment dans les processus de vapogazéification de la biomasse, où au moins une partie des composés organiques traités comportent souvent des atomes d'azote ou de soufre.

Il est également à noter que le catalyseur de l'invention, qui met en oeuvre l'olivine qui est un des minerais les plus abondants de la croûte terrestre et du fer, également très disponible, est un catalyseur respectueux de l'environnement et peu onéreux.

Compte tenu de ces différents avantages, les catalyseurs selon l'invention constituent une alternative très intéressante aux catalyseurs au nickel, dont ils partagent les avantages sans en présenter les inconvénients (il est à noter en particulier à ce sujet que les catalyseurs de l'invention, contrairement au catalyseurs au nickel ne nécessitent pas d'étape lourde de retraitement du catalyseur à l'issue de sa mise en oeuvre).

De plus, compte tenu du fait qu'ils comprennent spécifiquement de l'olivine, les catalyseurs de l'invention peuvent être employés à titre de catalyseur de vapogazéification de composés organiques notamment issus de la biomasse. Dans ce cas, le catalyseur joue deux rôles, à savoir que (1 °) il assure la vapogazéification des composés organiques ; et (2°) il assure une destruction efficace des goudrons formés lors de cette vapogazéification. Dans ce cadre, la faible tendance à l'attrition de l'olivine, associée au fait que le catalyseur ne contient pas de composés toxiques, autorise une utilisation des catalyseurs de l'invention pour la vapogazéification de composés organiques dans des procédés où le catalyseur est mis en oeuvre sous forme d'un lit fluidisé. Alternativement, les catalyseurs de l'invention peuvent toutefois être employés sous forme de lits fixes.

Lorsqu'ils sont employés dans le cadre du reformage des goudrons présents dans les milieux issus de processus de vapogazéification de la biomasse, les catalyseurs selon l'invention conduisent à des gaz purifiés qui sont bien adaptés aussi bien à titre de combustible gazeux que comme constituants gazeux de base pour la synthèse de composés chimiques. Les gaz obtenus dans ce cadre sont en règle générale, suffisamment purifiés pour qu'on puisse les employer en tant que tels dans certaines applications, et ces gaz présentent en outre une teneur en goudrons suffisamment faible pour qu'on puisse les filtrer sur des filtres catalytiques à membrane pour les débarrasser substantiellement de tout goudron (la teneur en goudrons dans les gaz obtenus est en général inférieur au seuil de tolérance des filtres), ce qui permet d'obtenir des gaz particulièrement purifiés, utilisables à titre de combustible à l'anode d'une pile à combustible, notamment de type SOFC ; ou bien à titre de combustible dans une turbine à gaz pour la production de chaleur et/ou d'électricité.

Un catalyseur selon l'invention comprend spécifiquement un support à base d'olivine sur lequel est déposé une couche à base de fer.

Par « support à base d'olivine », on entend un support constitué, en tout ou partie, par de l'olivine, le support comprenant au moins 50% en masse, de préférence au moins 80% en masse d'olivine par rapport à la masse totale du support, ce support étant de préférence substantiellement constitué d'olivine (de préférence à raison d'au moins 90%, voire d'au moins 95% et plus préférentiellement d'au moins 98% en masse par rapport à la masse totale du support).

L'olivine utilisée à titre de support dans un catalyseur selon l'invention est un matériau de type bien connu. Il s'agit d'un silicate mixte de magnésium et de fer dans lequel les cations magnésium et fer sont inclus dans une silice tétraédrique. L'olivine du support présent dans le catalyseur selon l'invention répond avantageusement à la formule (Mg₁₋ₓFe_{X})₂SiO₄ où x est un nombre non nul généralement inférieur à 1, le plus souvent compris entre 0,01 et 0,5, par exemple inférieur à 0,25 (x étant généralement entre 0,05 et 0,15, par exemple de l'ordre de 0,08 à 0,12), et qui peut comprendre des éléments additionnels à titre de traces (typiquement à raison de moins de 1%, de préférence moins de 0,5%), tels que Ca, Cr, Ni, ou Al, ou bien encore du fer libre (à savoir du fer non compris dans la structure du silicate).

De façon préférentielle, on utilise à titre de support dans le catalyseur selon l'invention une olivine naturelle qui peut par exemple provenir, à titre indicatif, des mines d'olivine naturelle qui se trouvent en Autriche ou en Italie. En particulier, une olivine naturelle bien adaptée à la mise en oeuvre de la présente invention est l'olivine commercialisée par la société Magnolithe GmbH (Autriche).

Selon un mode de réalisation préféré, l'olivine utilisée dans le catalyseur selon la présente invention est une olivine répondant à la formule (Mg₁₋ₓFeₓ)₂SiO₄ où x est compris entre 0,05 et 0,15 de préférence entre 0,08 et 0,12.

De préférence, quelle que soit sa formule exacte, l'olivine employée à titre de support dans le catalyseur de l'invention comprend, en masse par rapport à la masse totale de l'olivine :
- entre 28 % et 35 % de Mg ;
- entre 1 % et 10 % de Fe
- entre 18 % et 22 % de Si
- éventuellement, jusqu'à 0,5 % de Ni,
- éventuellement, jusqu'à 0,5 % de Ca
- éventuellement, jusqu'à 0,5 % de Al ; et
- éventuellement, jusqu'à 0,5 % de Cr.

Une olivine particulièrement bien adaptée à la mise en oeuvre de l'invention comprend, en masse par rapport à la masse totale de l'olivine : 30,5 de Mg ; 7,1 % de Fe ; 19,6 % de Si ; 0,20 % de Ca ; 0,07 % de Al ; et 0,08 % de Cr.

L'olivine employée à titre de support selon l'invention est, de préférence, une olivine ayant subi au préalable un traitement thermique, de type calcination, avantageusement à une température supérieure à 1000°C, et plus préférentiellement à une température supérieure à 1200°C, typiquement entre 1500 et 1700°C.

Par ailleurs, il est préférable d'employer à titre de support selon l'invention une olivine sous une forme divisée. Avantageusement, le support à base d'olivine présent dans un catalyseur selon l'invention est sous la forme d'une poudre (typiquement obtenue par broyage d'olivine naturelle) ayant une granulométrie moyenne comprise entre 100 µm et 750 µm, de préférence entre 250 et 600 µm, par exemple entre 350 et 500 µm (typiquement de l'ordre de 425 µm). Le catalyseur comprenant un tel support présente généralement une granulométrie similaire (et généralement identique).

Un catalyseur selon l'invention est obtenu en déposant un composé du fer sur le support précité.

Dans un catalyseur selon l'invention, la teneur en fer déposé sur le support, exprimée sur la base de la masse de fer élémentaire introduite rapportée à la masse totale du catalyseur est d'au moins 5%. Des résultats particulièrement intéressants sont obtenus pour des teneurs supérieures ou égales à 10%, par exemple entre 10 et 20%. Il n'est en général pas requis des teneurs en fer déposé sur le support supérieures à 20% pour obtenir une bonne conversion des goudrons, mais des teneurs plus élevées (par exemple allant jusqu'à 25%, voire jusqu'à 30% ne sont pas exclues dans la cadre de la présente invention).

Dans le catalyseur selon l'invention, le fer est introduit sur la surface du support par une imprégnation à partir d'une solution d'un sel de fer suivie d'un traitement thermique, généralement sous air, ou, plus généralement, sous atmosphère oxydante permettant de fixer sur la surface du support des espèces à base de fer, qui se trouvent en forte interaction avec le fer présent au sein de l'olivine.

Typiquement, un catalyseur utile selon la présente invention est obtenu en mettant en oeuvre un procédé comprenant les étapes suivantes :
(A) on imprègne un support à base d'olivine, de préférence du type précité (et avantageusement préalablement traité thermiquement à une température d'au moins 1000°C, par exemple entre 1500 et 1700°C), par une solution comprenant un sel de fer ; puis
(B) on sèche le solide imprégné obtenu à l'issue de l'étape (A), puis
(C) on traite thermiquement le solide séché, de préférence sous air, à une température de 400 à 1400° C, de préférence à une température de 600 à 1400° C.

Ce procédé de préparation constitue, selon un autre aspect, un autre objet spécifique de la présente invention.

L'imprégnation et le séchage des étapes (A) et (B) peuvent être effectués selon tout moyen connu en soi. Typiquement, on imprègne l'olivine en la mettant en contact, de préférence à l'état divisé, avec la solution du sel de fer (généralement en formant une dispersion de l'olivine dans la solution) puis on évapore le mélange obtenu, en général de 5 à 20 heures (de l'ordre de 10 heures à 15 heures, typiquement) à une température généralement comprise entre 50 et 150° C (par exemple sous reflux du solvant, typiquement dans un évaporateur rotatif).

La solution de sel de fer employée dans l'étape (A) est de préférence une solution aqueuse. Plus généralement, il peut s'agir d'une solution dans un solvant polaire (par exemple l'éthanol ou un mélange eau/éthanol).

Le sel de fer employé dans l'étape (A) peut quant à lui être un sel ferrique, un sel ferreux ou un mélange de plusieurs sels ferreux et/ou ferriques. Le sel employé peut notamment être un nitrate, un chlorure ou un acétate, les nitrates étant généralement bien adaptés, notamment compte tenu de leur bonne solubilité et de leur coût réduit. Typiquement, le sel de fer employé dans l'étape (A) est un nitrate ferrique, un nitrate ferreux, un chlorure ferrique, un chlorure ferreux, un acétate ferrique, un acétate ferreux, ou un mélange de deux ou plus de ces sels. Selon un mode de réalisation intéressant, le sel de fer employé pour préparer un catalyseur selon l'invention est le nitrate ferrique, de formule Fe(NO₃)₃

La concentration de la solution employée dans l'étape (A) est calculée en fonction de la quantité de fer qu'on souhaite déposer à la surface du catalyseur. En général, la quasi-totalité du sel de fer introduit dans la solution se retrouve déposée sur l'olivine à l'issue des étapes (A) et (B), la quantité de sel de fer à introduire dans la solution employée dans l'étape (A) se calculant alors directement en fonction du rapport Fe/olivine souhaité dans le catalyseur final.

L'étape de traitement thermique mise en oeuvre pour la préparation du catalyseur de l'invention, en particulier dans l'étape (C) précitée, permet de lier le fer déposé à l'olivine. A cet effet, il est préférentiellement conduit sous air. De préférence, le traitement thermique est conduit à une température supérieure ou égale à 600°C, plus préférentiellement supérieure à 700°C, et plus préférentiellement encore supérieure à 850°C. Cependant, comme le montrent des analyses de réduction en température programmée du catalyseur (TPR), il est préférable que le traitement thermique ne soit pas conduit à une température trop élevée, sans quoi les interactions fortes entre le fer et l'olivine sont trop élevée ce qui rend une partie du fer introduit non utilisable pour la réaction de réformage des goudrons, ce qui diminue l'efficacité du catalyseur pour effectuer le réformage des goudrons. De ce fait, la température du traitement thermique mis en oeuvre pour la préparation du catalyseur de l'invention, en particulier dans l'étape (C), est de préférence inférieure à 1400°C, et plus avantageusement inférieure à 1200°C. Ainsi, typiquement, il est intéressant de conduire cette étape de traitement thermique à une température comprise entre 900 et 1100°C.

Typiquement, de façon à obtenir une bonne conversion du sel de fer déposé et une liaison optimale des espèces à base de fer sur l'olivine, le traitement thermique de l'étape (C) est conduit en laissant le solide séché obtenu à l'issue de l'étape (B) à la température précitée pendant une durée de 2 à 10 heures.

Une analyse de diffraction X (XRD) d'un catalyseur selon l'invention montre que la structure de l'olivine est conservée dans le catalyseur obtenu à l'issue de l'étape (C), et ce quelle que soit la quantité de fer imprégnée déposée sur la surface de ce catalyseur.

Par ailleurs, des analyses par spectroscopies photoélectronique X (spectroscopie XPS) et Mössbauer montrent que le catalyseur selon l'invention comprend essentiellement le fer à l'état d'oxydation II et III, le fer II étant présent au sein de l'olivine et le fer III étant localisé en surface et au niveau des joints de grains de l'olivine sous forme d'oxyde de Fer III (Fe₂O₃) ou dans une phase spinelle Fe-Mg, la quantité de fer III disponible en surface augmentant avec la température du traitement thermique de l'étape (C). Cette structure spécifique du catalyseur s'avère tout particulièrement intéressante, dans la mesure où, sans vouloir être lié par une théorie particulière, il semble pouvoir être avancé au vu des travaux des inventeurs que c'est la présence de fer localisé en surface et au niveau des joints de grains (oxyde de fer) qui est responsable de l'activité du catalyseur dans le réformage des goudrons. Cet oxyde de fer III est vraisemblablement réduit, ponctuellement, en des espèces Fe II ou Fe° lorsqu'il est mis en contact avec la vapeur d'eau et les gaz produits dans le milieu par le reformage catalytique des goudrons, ces espèces métalliques étant vraisemblablement les véritables espèces actives dans la catalyse du réformage des goudrons, alors que le fer II présent au sein de la structure olivine-semble être inactif.

Des analyses par spectroscopie Mössbauer de catalyseurs selon l'invention indiquent par ailleurs que la quantité de fer à l'état d'oxydation +II au sein de l'olivine diminue lorsque la température du traitement thermique de l'étape (C) augmente, ce fer à l'état d'oxydation +II (non disponible pour le réformage) étant oxydé en Fe III réductible.

Quel que soit son mode exact de préparation, un catalyseur selon l'invention peut avantageusement être employé pour effectuer le vaporéformage de goudrons présents au sein d'un milieu gazeux, en présence de vapeur d'eau, de façon à convertir ces goudrons en un mélange gazeux comprenant de l'hydrogène et en CO et/ou CO₂. Les catalyseurs selon l'invention présentent dans ce cadre une activité similaire à celle des catalyseurs à base de nickel supportés sur olivine décrits par exemple dans la demande FR 2 809 030, et bien supérieure à celle de l'olivine employée seule.

Selon encore un autre aspect spécifique, la présente invention a pour objet cette utilisation des catalyseurs de l'invention, et, plus spécifiquement, un procédé de vaporéformage de goudrons présents au sein d'un milieu gazeux, dans lequel on met en contact les goudrons avec un catalyseur selon l'invention en présence de vapeur d'eau.

Dans ce procédé, de préférence, la mise en contact des goudrons et du catalyseur s'effectue en outre en présence d'hydrogène. Dans ce cas, le catalyseur est mis en contact avec les goudrons en présence de vapeur d'eau et d'hydrogène, de préférence avec un rapport molaire H₂/H₂O supérieur à 1 :1, sans quoi on peut observer un phénomène de désactivation du catalyseur au cours du temps. Ce rapport molaire H₂/H₂O reste toutefois, de préférence, inférieur à 2 :1, sans quoi l'hydrogène, présent en quantité trop importante, tend à défavoriser la réaction de réformage, conduisant ainsi à une diminution de la conversion des goudrons et à une diminution du rendement en hydrogène.

L'efficacité de la conversion des goudrons en hydrogène dans un procédé de vaporéformage mettant en oeuvre un catalyseur selon l'invention est, en règle générale, d'autant plus élevée que le temps de contact entre le catalyseur et les goudrons est important.

Par ailleurs, une réaction de vaporéformage mettant en oeuvre un catalyseur selon l'invention est avantageusement conduite à une température supérieure à 700°C (plus avantageusement d'au moins 750°C, et plus préférentiellement d'au moins 775°C) de préférence à une température entre 700 et 900°C, préférentiellement entre 750 et 850 °C, par exemple entre 800 à 850°C, (typiquement aux alentours de 825°C).

Selon un mode de réalisation particulièrement intéressant, le procédé de vaporéformage de goudrons de l'invention peut être mis en oeuvre pour traiter, à titre de milieu gazeux contenant des goudrons, un milieu obtenu par vapogazéification de composés organiques, notamment issus de la biomasse. Dans ce type d'application, le catalyseur s'avère non seulement utile pour le réformage des goudrons, mais il permet en outre dans certains cas de piéger d'autres polluants présents dans le milieu, tels que des composés soufrés de type H₂S ou de l'ammoniac.

Comme indiqué plus haut dans la présente description, un catalyseur selon l'invention présente l'avantage d'être à la fois actif pour effectuer le réformage de goudrons et la vapogazéification de composés issus de la biomasse. Dès lors, le catalyseur peut avantageusement être employé à titre d'unique catalyseur pour effectuer la vapogazéification d'un composé organique issu de la biomasse et pour convertir dans le même temps tout ou partie des goudrons formés au cours de cette réaction.

Dans ce cadre, un catalyseur selon l'invention présente l'avantage d'être actif dans la réaction dite de conversion du gaz à l'eau, selon le schéma réactionnel suivant :

CO + H₂O → CO₂ + H₂

ce qui permet encore d'augmenter la production d'hydrogène par conversion du CO produit lors de la vapogazéification. Le catalyseur de la présente invention se distingue notamment en cela des catalyseurs au nickel, qui sont inopérants pour la réaction de conversion du gaz à l'eau.

Selon encore un autre aspect spécifique, la présente invention a pour objet un procédé de vapogazéification d'un composé organique issu la biomasse, dans lequel on met en contact ledit composé organique, de la vapeur d'eau et un catalyseur selon l'invention.

Dans les procédés de vapogazéification et de vaporéformage précités qui emploient le catalyseur selon l'invention, ce catalyseur peut avantageusement être mis en oeuvre sous la forme d'un lit fluidisé ou d'un lit fluidisé circulant. Alternativement, il peut également être mis en oeuvre sous la forme d'un lit fixe, quoique ce mode de réalisation se révèle, en général, moins intéressant.

Par ailleurs, les procédés de vapogazéification et de vaporéformage mettant en oeuvre les catalyseurs de l'invention présentent l'avantage non négligeable de ne pas nécessiter une activation préalable du catalyseur, qui est utilisé en tant que tel dans la réaction concernée. Les travaux des inventeurs ont permis de mettre en évidence à ce sujet qu'il est sans utilité de procéder à une réduction préalable du catalyseur, l'activité du catalyseur dans la réaction de réformage des goudrons et le rendement en hydrogène dans cette réaction étant, en général, inchangés, que cette pré réduction ait lieu ou non. Cette non nécessité de procéder à une activation préliminaire du catalyseur constitue un grand avantage du système catalytique de l'invention, qui se traduit notamment en des avantages notables en termes de praticité et de coût de fonctionnement des procédés mettant en oeuvre ces catalyseurs.

Différents aspects et avantages de l'invention ressortiront encore davantage de l'exemple de mise en oeuvre donné ci-après à titre illustratif.

### EXEMPLES

On a préparé deux catalyseurs C1 et C2 selon l'invention dans les conditions définies dans les exemples 1 et 2 ci-après, qu'on a testé selon le protocole décrit dans les exemples 3 et 4.

Pour la préparation des catalyseurs C1 et C2, on a employé, à titre de support, une olivine provenant de la société Magnolithe GmbH, ayant une granulométrie de 400-600µm et préalablement calcinée à 1600°C. La composition élémentaire massique de l'olivine utilisée est la suivante :

| | |
|---|---|
| 30,5 % de Mg 7,1 % de Fe | 19,6 % de Si |
| 0,20 % de Ca 0,07 % de Al | 0,08 % de Cr. |

### Exemple 1 : Préparation du catalyseur C1 (10%Fe/olivine)

### ▪ Imprégnation du support

20 g de l'olivine précitée a été mélangé à 20 millilitres d'une solution aqueuse de nitrate ferrique Fe(NO₃)₃, 9H₂O ayant une concentration de 2,1 mol/litre.

### ▪ séchage

On a évaporé l'eau dans un évaporateur rotatif à pression atmosphérique en chauffant à l'aide d'un bain d'huile à une température de 120°C pendant 2h, puis on a séché le mélange pendant 15 heures (une nuit) à 100°C.

### ▪ traitement thermique

On a traité thermiquement sous air le matériau issu de l'étape de séchage précédente pendant 4 heures à une température de 1000°C.

### Exemple 2 : Préparation du catalyseur C2 (20%Fe/olivine)

Elle a été effectuée dans les mêmes conditions que pour le catalyseur C2, à la différence que l'imprégnation du support a été réalisée en employant une solution aqueuse de nitrate ferrique Fe(NO₃)₃, 9H₂O plus concentrée, à savoir ayant une concentration de 5 mol/litre.

Les catalyseurs C1 et C2 ainsi préparés ont été employés tels quels (sans pré-réduction préalable) pour effectuer une réaction de vaporéformage catalytique de deux goudrons type, à savoir le toluène et le 1-méthylnaphtalène, qui sont représentatifs des goudrons formés dans les processus de vapogazéification de la biomasse.

### Exemple 3 : Vaporéformage du toluène

### ▪ Exemple 3.1

Les catalyseurs C1 et C2 ont été employés pour traiter, à 825°C, un milieu gazeux constitué, en volume, de :
- 12% de H₂O;
- 22,3% de H₂ ;
- 20% de N₂ ; et
- 45% d'Ar
et comprenant du toluène à une concentration de 30g/Nm³ (ce qui correspond à la fourchette haute des teneurs en goudrons typiques obtenues lors du processus de gazéification de la biomasse).

Pour effectuer le vaporéformage du toluène, la vapeur d'eau a été introduite dans le milieu gazeux à une concentration qui correspond à la quantité stoechiométrique pour réaliser les réactions de conversion théoriques suivantes :

C₇H₈ (toluène) + 14H₂O -> 18H₂ + 7CO₂

C₁₁H₁₀ (1-méthylnaphtalène) + 22H₂O -> 27H₂ + 11CO₂

L'hydrogène dans le milieu est quant à lui présent avec un rapport molaire H₂/H₂O de 1,5 : 1.

Le mélange gazeux ainsi réalisé a ensuite été mis en contact avec 400mg de catalyseur (C1 ou C2, respectivement), à 825°C, dans un réacteur à lit

Des analyses de XRD, spectroscopie Mössbauer et TPR indiquent que, dans ces conditions, le catalyseur comporte toujours une base de structure olivine et que le fer III présent notamment en surface disparaît en grande partie, au profit de l'apparition d'une phase de fer métallique (Fe⁰). En fait, pour le catalyseur C1 le fer présent se répartit essentiellement en du fer métal (pour plus de 40%) et du fer II est présent pour une partie au sein de la structure de l'olivine (pour plus de 25%) et, pour une autre partie, sous forme d'oxydes (pour plus de 15%). Pour le catalyseur C2, la répartition du fer est la suivante : plus de 55% en fer métal, plus de 14% en fer II de la structure olivine et plus de 14% de fer II sous forme d'oxyde de fer. Le complément est sous forme de fer III.

Avec le catalyseur C1 (10% Fe/olivine), on a obtenu une conversion de toluène de 90% et un rendement en hydrogène de 60 %. Ce taux de conversion et ce rendement se sont montrés stables au cours du temps durant toute la durée du test de 30 h qui a été effectué.

Avec le catalyseur C2 (20% Fe/olivine), la conversion de toluène obtenue a été encore supérieure, à savoir de 95%, avec un rendement en hydrogène de l'ordre de 60 %, ce taux de conversion et ce rendement étant également stables sur les 30 h de test réalisées.

A des fins de comparaison, le mélange gazeux a été traité par de l'olivine seule, toujours dans les mêmes conditions. La conversion de toluène obtenue dans ce cadre est de 31% et le rendement en hydrogène est de 30%, ce qui est largement inférieur aux valeurs obtenues avec les catalyseurs C1 et C2.

A noter que les résultats obtenus avec le catalyseur C1 en termes de conversion et de rendement sont identiques à ceux obtenus, dans les mêmes conditions, avec le catalyseur Ni/olivine exemplifié dans la demande FR 2809030, qui contient 3,9% de Nickel sur de l'olivine.

### ▪ Exemple 3.2

Les catalyseurs C1 et C2 ont par ailleurs été employés à la même température pour traiter un mélange gazeux similaire à celui issu de la gazéification de la biomasse en lit fluidisé, dont la composition volumique du gaz sec est la suivante : 35% d'hydrogène, 35% de monoxyde de carbone, 17% dioxyde de carbone, 10% de méthane, 3% de toluène (soit 30g/Nm3, ce qui correspond à la fourchette haute des teneurs en goudrons typiques obtenues lors du processus de gazéification de la biomasse).

On a introduit dans ce milieu de la vapeur d'eau en une quantité correspondant à la quantité stoechiométrique des réactions précitées (25% en volume dans le flux gazeux, soit 14 moles d'eau pour une mole de toluène), pour réaliser la réaction de conversion du toluène en CO₂ et H₂).

Avec le catalyseur C1 (10% Fe/olivine), on a obtenu un mélange gazeux dont la composition volumique en sortie de réacteur (base sèche) est la suivante : 46% d'hydrogène, 28% de monoxyde de carbone, 18% de dioxyde de carbone, 10% de méthane. Ceci correspond à une conversion du toluène d'au moins 95 %. La conversion du toluène et la composition du gaz se sont montrées stables au cours du temps durant toute la durée du test de 30 h qui a été effectué.

### Exemple 4 : Vaporéformage du 1-méthylnaphtalène

### ▪ Exemple 4.1

Le catalyseur C1 a été employés pour traiter, à 825°C, un milieu gazeux constitué en volume de 36% d'H₂O, 20% de N₂ et 43% d'Ar et comprenant du 1-méthylnaphtalène à une concentration de 30g/Nm³ (1% en volume) ce qui correspond à la fourchette haute des teneurs en goudrons typiques obtenues lors du processus de gazéification de la biomasse.

Pour effectuer le vaporéformage, on a introduit dans le milieu gazeux de la vapeur d'eau à une concentration qui correspond à 3 fois la quantité stoechiométrique soit 66 moles d'eau par mole de 1-méthylnaphtalène

Le mélange gazeux ainsi réalisé a ensuite été mis en contact avec 400mg de catalyseur C1 à 825°C dans un réacteur à lit fixe à pression atmosphérique et avec un débit du flux gazeux à l'entrée du réacteur de 3NL/h.

Des analyses de XRD, spectroscopie Mössbauer et TPR indiquent que, dans ces conditions, la structure olivine est conservée. En présence uniquement d'eau, le fer présent sur le catalyseur se répartit sous forme de Fe₃O₄ (pour plus de 62%), de FeO (pour plus de 13%) et de fer II de la structure olivine (pour plus de 21%)

Dans ces conditions, on a obtenu avec le catalyseur C1 une conversion de 1-méthylnaphtalène de 40% et un rendement en hydrogène de 25%. Ce taux de conversion et ce rendement se sont montrés stables au cours du temps durant toute la durée du test de 8h effectué.

### ▪ Exemple 4.2

Le catalyseur C2 a été employé pour traiter à 825°C un milieu gazeux constitué en volume de 12% d'H₂O, 20% de N₂ et 68% d'Ar comprenant du 1-méthylnaphtalène à une concentration de 30g/Nm³, et la vapeur d'eau à une concentration correspondant à la quantité stoechiométrique, dans les mêmes conditions de température, pression, débit que dans l'exemple 4.1.

Le catalyseur C2 a ainsi permis de réaliser une conversion de 1-méthylnaphtalène de 25% et un rendement en hydrogène de 15%. Ce taux de conversion et ce rendement se sont montrés stables au cours du temps durant toute la durée du test de 8h effectué.

## Revendications

1. Catalyseur ayant un support comprenant au moins 50% en masse d'olivine par rapport à la masse totale dudit support et sur lequel est déposé une couche à base d'un composé du fer obtenue par imprégnation du support d'olivine par une solution comprenant un sel de fer, puis traitement thermique du support imprégné, sous atmosphère oxydante, de préférence sous air, à une température comprise entre 400 et 1400° C, de préférence entre 600 et 1400° C, et où la teneur en fer déposé sur le support, exprimée sur la base de la masse de fer élémentaire introduite rapportée à la masse totale du catalyseur est d'au moins 5 %.

2. Catalyseur selon la revendication 1, où l'olivine répond à la formule (Mg₁₋ₓ Feₓ)₂SiO₄ où x est un nombre non nul et inférieur à 1, de préférence compris entre 0,01 et 0,5.

3. Catalyseur selon la revendication 1 ou 2, où l'olivine comprend, en masse par rapport à la masse totale de l'olivine :
- entre 28 % et 35 % de Mg ;
- entre 1 % et 10 % de Fe
- entre 18 % et 22 % de Si
- éventuellement, jusqu'à 0,5 % de Ni,
- éventuellement, jusqu'à 0,5 % de Ca
- éventuellement, jusqu'à 0,5 % de Al ; et
- éventuellement, jusqu'à 0,5 % de Cr.

4. Catalyseur selon l'une des revendications 1 à 3, où le support à base d'olivine est sous la forme d'une poudre ayant une granulométrie moyenne comprise entre 100 µm et 750 µm, de préférence entre 250 µm et 600 µm.

5. Catalyseur selon l'une des revendications 1 à 4, où la teneur en fer déposé sur le support, exprimée sur la base de la masse de fer élémentaire introduite rapportée à la masse totale du catalyseur est comprise entre 10 et 20%

6. Procédé de préparation d'un catalyseur selon l'une des revendications précédentes, comprenant les étapes successives suivantes :
(A) on imprègne un support comprenant au moins 50 % en masse par rapport au support d'olivine par une solution comprenant un sel de fer ;
(B) on sèche le solide imprégné obtenu à l'issue de l'étape (A),
(C) on traite thermiquement, sous atmosphère oxydante, de préférence sous air, le solide séché obtenu à l'issue de l'étape (B), en laissant ce solide séché à une température comprise entre 400 et 1400°C, de préférence entre 600 et 1400°C.

7. Procédé selon la revendication 6, dans lequel la solution employée dans l'étape (A) est une solution aqueuse.

8. Procédé selon la revendication 6 ou 7, où le sel de fer employé dans l'étape (A) est un nitrate ferrique Fe(NO₃)₃.

9. Procédé selon l'une des revendications 6 à 8, où le traitement thermique de l'étape (C) est conduite en laissant le solide séché issu de l'étape (B) à une température de 600°C à 1400°C, de préférence entre 900 et 1100°C.

10. Procédé selon la revendication 9, où le traitement thermique de l'étape (C) est conduit en laissant le solide séché obtenu à l'issue de l'étape (B) à la température définie dans la revendication 9 pendant une durée de 2 à 10 heures.

11. Procédé de vaporéformage de goudrons présents au sein d'un milieu gazeux, dans lequel on met en contact les goudrons avec un catalyseur selon l'une des revendications 1 à 5 en présence de vapeur d'eau, et, de préférence, en présence d'hydrogène.

12. Procédé de vaporéformage selon la revendication 11, où le catalyseur est mis en contact avec les goudrons en présence de vapeur d'eau et d'hydrogène, avec un rapport molaire H₂/H₂O supérieur à 1 :1 et inférieur à 2 :1.

13. Procédé de vaporéformage selon la revendication 11 ou 12, où le milieu gazeux contenant les goudrons est obtenu par vapogazéification de composés organiques, par exemple issus de la biomasse.

14. Procédé de vapogazéification d'un composé organique issu la biomasse, dans lequel on met en contact ledit composé organique, de la vapeur d'eau et un catalyseur selon l'une des revendications 1 à 5 mis en oeuvre sous la forme d'un lit fluidisé.

## Patentansprüche

1. Katalysator, umfassend einen Träger mit mindestens 50 Gew-.% Olivin bezogen auf das Gesamtgewicht des Trägers, und auf dem eine Schicht auf Basis einer Eisenverbindung abgeschieden ist, wobei die Schicht erhalten wird durch Imprägnieren des Olivin-Trägers mit einer ein Eisensalz umfassenden Lösung und anschließendes thermisches Behandeln des imprägnierten Trägers unter oxidierender Atmosphäre, vorzugsweise Luft, bei einer Temperatur zwischen 400 und 1400 °C, vorzugsweise zwischen 600 und 1400 °C,
und wobei der auf dem Träger abgeschiedene Eisengehalt, der auf Basis des Gewichts des zugeführten elementaren Eisens bezogen auf das Gesamtgewicht des Katalysators ausgedrückt ist, mindestens 5% beträgt.

2. Katalysator nach Anspruch 1, wobei der Olivin der Formel (Mg₁₋ₓFeₓ)₂SiO₄ entspricht, wobei x eine von Null verschiedene Zahl und weniger als 1 ist, vorzugsweise zwischen 0,01 und 0,5.

3. Katalysator nach Anspruch 1 oder 2, wobei der Olivin umfasst, bezogen auf das Gesamtgewicht von Olivin:
- zwischen 28% und 35% Mg;
- zwischen 1% und 10% Fe;
- zwischen 18% und 22% Si,
- gegebenenfalls bis zu 0,5% Ni,
- gegebenenfalls bis zu 0,5% Ca,
- gegebenenfalls bis zu 0,5% Al; und
- gegebenenfalls bis zu 0,5% Cr.

4. Katalysator nach einem der Ansprüche 1 bis 3, wobei der Olivin-basierte Träger in Form eines Pulvers mit einer mittleren Teilchengröße zwischen 100 µm und 750 µm ist, vorzugsweise zwischen 250 µm und 600 µm.

5. Katalysator nach einem der Ansprüche 1 bis 4, wobei der Gehalt an auf dem Träger abgeschiedenem Eisen, der auf Basis des Gewichts des zugeführten elementaren Eisens bezogen auf das Gesamtgewicht des Katalysators ausgedrückt ist, zwischen 10 und 20% liegt.

6. Verfahren zum Herstellen eines Katalysators nach einem der vorhergehenden Ansprüche, umfassend die folgenden aufeinanderfolgenden Schritte:
(A) Imprägnieren eines Trägers mit mindestens 50 Gew-.% Olivin bezogen auf den Olivin-Träger mit einer Lösung, die ein Eisensalz umfasst;
(B) Trocknen des in Schritt (A) erhaltenen imprägnierten Feststoffes;
(C) thermisches Behandeln des in Schritt (B) erhaltenen getrockneten Feststoffes unter oxidierender Atmosphäre, vorzugsweise Luft, durch Zurücklassen des getrockneten Feststoffes bei einer Temperatur zwischen 400 und 1400 °C, vorzugsweise zwischen 600 und 1400 °C.

7. Verfahren nach Anspruch 6, wobei die in Schritt (A) verwendete Lösung eine wässrige Lösung ist.

8. Verfahren nach Anspruch 6 oder 7, wobei das in Schritt (A) verwendete Eisensalz ein Eisen(III)-Nitrat Fe(NO₃)₃ ist.

9. Verfahren nach einem der Ansprüche 6 bis 8, wobei das thermische Behandeln von Schritt (C) durch Zurücklassen des in Schritt (B) getrockneten Feststoffes bei einer Temperatur von 600 °C bis 1400 °C, vorzugsweise 900 bis 1100 °C, durchgeführt wird.

10. Verfahren nach Anspruch 9, wobei das thermische Behandeln von Schritt (C) durch Zurücklassen des in Schritt (B) getrockneten Feststoffes bei der in Anspruch 9 definierten Temperatur für einen Zeitraum von 2 bis 10 Stunden durchgeführt wird.

11. Verfahren zum Dampfreformieren von Teeren, die in einem gasförmigen Medium vorliegen, wobei die Teere in Gegenwart von Wasserdampf, und vorzugsweise, in Gegenwart von Wasserstoff, mit einem Katalysator nach einem der Ansprüche 1 bis 5 in Kontakt gebracht werden.

12. Verfahren zum Dampfreformieren nach Anspruch 11, wobei der Katalysator in Gegenwart von Wasserdampf und Wasserstoff in einem Molverhältnis von H₂ / H₂O größer als 1:1 und kleiner als 2:1 mit den Teeren in Kontakt gebracht wird.

13. Verfahren zum Dampfreformieren nach Anspruch 11 oder 12, wobei das gasförmige Medium, das die Teere enthält, durch Dampfvergasen von organischen Verbindungen, die beispielsweise aus Biomasse stammen, erhalten wird.

14. Verfahren zum Dampfvergasen einer organischen Verbindung, die aus der Biomasse stammt, wobei die organische Verbindung mit Wasserdampf und mit einem Katalysator nach einem der Ansprüche 1 bis 5 in Kontakt gebracht wird, wobei das Inkontaktbringen in Form eines Fließbetts durchgeführt wird.

## Claims

1. Catalyst having a substrate comprising at least 50% by mass olivine based on total mass of said substrate and on the surface of which is deposited a layer containing an iron compound obtained by impregnating the olivine substrate with a solution comprising an iron salt, followed by heat treatment of the impregnated substrate, at a temperature of between 400 and 1,400° C, preferably between 600 and 1,400°C, and
wherein the iron content deposited on the substrate, expressed by mass relative to the total mass of the catalyst is at least 5% Fe(III).

2. The catalyst according to claim 1, wherein the olivine meets the formula (Mg₁₋ₓFeₓ)₂SiO₄ in which x is a nonzero number and lower than 1, preferably between 0.01 and 0.5.

3. The catalyst according to claim 1 or 2, wherein the olivine in the olivine-based substrate comprises in mass relative to the total mass of the olivine:
between 28% and 35% Mg;
between 1% and 10% Fe;
between 18% and 22% Si;
optionally up to 0.5% Ni;
optionally up to 0.5% Ca;
optionally up to 0.5% Al; and
optionally up to 0.5% Cr.

4. The catalyst according to any one of claims 1 to 3, wherein the olivine-based substrate is in a form of a powder having a mean particle size of between 100 µm and 750 µm, preferably between 250 µm and 600µm.

5. The catalyst according to any one of claims 1 to 4, wherein the iron content deposited on the substrate, expressed by mass relative to the total mass of the catalyst, is comprised between 10 and 20%.

6. A method for preparing a catalyst according to any one of preceding claims , comprising the following successive steps:
(A) impregnating a substrate comprsing at least 50% by mass olivine based on total mass of said substrate with a solution comprising an iron salt;
(B) drying the impregnated solid obtained after step (A); and
(C) heat treating, under oxidizing atmosphere, preferably under air, the dried solid obtained after step (B) by leaving this dried solid at a temperature of between 400 and 1,400° C.

7. The method according to claim 6, wherein the solution used at step (A) is an aqueous solution.

8. The method according to claim 6 or 7, wherein the iron salt used at step (A) is a ferric nitrate Fe(NO₃)₃.

9. The method according to any one of claims 6 to 8, wherein the heat treatment at step (C) is conducted leaving the dried solid derived from step (B) at a temperature of 600 to 1,400° C, preferably 900 to 1,100°C.

10. The method according to claim 9, wherein the heat treatment at step (C) is conducted leaving the dried solid obtained after step (B) at a temperature defined in claim 9 for a time of 2 to 10 hours.

11. A method for steam reforming tars present in a gaseous medium, wherein the method comprises contacting the tars with a catalyst according to any one of claims 1 to 5 in the presence of steam, and, preferably, in the presence of hydrogen.

12. The steam reforming method according to claim 11, wherein the catalyst is contacted with the tars in the presence of steam and hydrogen, with a molar ratio H₂/H₂O of more than 1:1 and less than 2:1.

13. The steam reforming method according to claim 11 or 12, wherein the gaseous medium containing the tars is obtained by steam gasification of organic compounds, for example derived from biomass.

14. A method for steam gasifying an organic compound derived from biomass, wherein the method comprises contacting the organic compound, steam and a catalyst according to any one of claims 1 to 5 in a form of a fluidized bed.
